# EUROPEAN PATENT APPLICATION

(11) **EP 2 767 947 A1**
(43) Date of publication of application: **20.08.2014**
(21) Application number: 12840810.1
(22) Date of filing: 12.04.2012
(51) Int. Cl.: G06Q 30/06, H04W 4/18

(54) **INTEGRATED AUTHENTICATION SYSTEM USING ELECTRONIC CONTRACT**

(30) Priority: 14.10.2011 KR 20110105067
(71) Applicant: I-ON Communications Co., Ltd., Seoul 135-080 (KR)
(72) Inventor: YANG, Jae Hyek, Seoul 137-070 (KR); PARK, Jeom Bae, Seoul 136-130 (KR); PARK, Jung Tae, Uiwang-si Gyeonggi-do 437-728 (KR); KIM, Jae Hyuk, Gwangmyeong-si Gyeonggi-do 423-710 (KR); LEE, Seok Kyoo, Seoul 152-838 (KR); HAN, Sang Kyu, Osan-si Gyeonggi-do 447-240 (KR)
(74) Representative: Kordel, Mattias
(86) International application number: PCT/KR2012/002758
(87) International publication number: WO 2013/054993

(57) **Abstract**

The present invention relates to an integrated system which manages the conclusion of an electronic contract by allowing a concluded electronic contract in a mobile terminal to be transmitted to and received from an integrated authentication server, and the integrated system comprises: an electronic contract used when concluding an electronic electronic; a mobile terminal which downloads the electronic contract from an integrated authentication server to conclude a contract and transmits a concluded electronic contract to the integrated authentication server; and the integrated authentication server which transmits the electronic contract to the mobile terminal, receives the concluded electronic contract from the mobile terminal, and integratedly manages the conclusions of electronic contracts, wherein the integrated authentication server comprises: a form design unit which draws up the electronic contract by imaging a contract desired to be concluded by a concerned person, and designs the form of the electronic contract by imaging a contract desired to be concluded by the person concerned, and designs the form of the electronic contract; an authentication unit which manages logins by authenticating the mobile terminal and a user; a form transmission unit which transmits the electronic contract designed by the form design unit to the mobile terminal; and a forgery and alteration checking unit which checks whether or not the electronic contract concluded by the mobile terminal has been forged or altered.

## Description

### [Technical Field]

The present invention relates to an integrated authentication system using an electronic contract form. More specifically, a mobile terminal downloads the electronic contract form from the integrated authentication system. The contract parties make a contract by means of the mobile terminal, attach evidences for certifying the contract conclusion by the mobile terminal in real time, and re-transfer the concluded electronic contract form to the integrated authentication system. Finally, the integrated authentication system checks for the counterfeit or falsification of the electronic contract form and notifies the contracting parties of the conclusion of the electronic contract.

### [Background Art]

Online contracts electronically made by laptops or mobile terminals are used now more often than offline ones as information technology develops and the use of e-commerce through the internet has grown rapidly in recent years.

Electronic contracts, conducted by communications network, are the contracts of commercial transactions using electronic contracts as a legal act electronically agreed upon by two or more parties for certain legal effects.

Electronic contracts have several advantages: first, there is no need for paper documents; second, contracts can be made regardless of time and place; third, there are various types of supporting evidence for conclusion of contracts; etc. However, there are also disadvantages: first, it is easy to counterfeit and falsify their contents; second, it is hard to verify the authenticity of original copies of the contracts; third, it is not complicated to duplicate the signature or fingerprints of the parties; fourth, contracts can be easily exposed or duplicated by disinterested parties without permission of the contractors; etc.

To overcome the above disadvantages of electronic contracts, there have been various technical attempts. One example is "ELECTRONIC CONTRACT SERVICE METHOD" (Korean Patent Application No. 10-2002-0079609). This method discloses constitutions for showing and selecting several types of contracts, and for determining whether to modify or to check the selected contract. However, the method cannot disclose technical features to select and modify various types of electronic contracts because this method confines electronic contracts to a certain type. Furthermore, the contracting parties using this method could feel a sense of difference between an online contract and an offline contract because this method cannot reflect a real contract by an electronic contract.

The second example is "SYSTEM AND METHOD FOR CYBER-CONTACTING OVER NETWORK" (Korean Patent Application No. 10-2001-0046049). This invention comprises i) a process for making an online contract and attaching files in order to write, modify, conclude, and store the electronic contract; ii) a process for identifying and designating the contracting parties, for setting various types of contracts, for checking submission of guarantees for contract fulfillment; iii) a process for providing certificates; iv) a process for verifying counterfeit and falsification of the electronic contract; and v) a process for storing and managing the electronic contract. However, this invention cannot also reflect a real contract by the electronic contract and disclose methods to attach various evidences for conclusion of contracts.

The third example is "STORAGE MAINTENANCE SYSTEM FOR CONTRACT DOCUMENT AND BUGGED RECORDINGS RELATED TO CONTRACT OF DIGITAL SIGNATURE TYPE" (Korean Patent Application No. 10-2010-0020974). This invention comprises i) a web server for receiving an electronic contract, input data and digital signature from the online network, and providing data regarding the contract to the client's terminal; ii) an encryption and decryption server for encrypting and decrypting the data and electronic signatures; iii) a database server for storing data; iv) a control server for controlling the entire operating process; and v) a recording server to support the recording of voices. Although this invention discloses the constitution for recording the voices of the contracting parties as an evidence, like the above prior arts, this invention cannot implement and modify the real offline contract by using the online contract, has only recorded voices as evidence, and cannot notify the conclusion of the contract to the contract parties' cell phones or e-mails. Furthermore, if the mobile terminal does not support the codec of the recorded voices, the user of the mobile terminal has to download the proper Codec supporting the voice files.

### [Detailed Description]

### [Technical Problem]

In order to solve the above conventional problems, the present invention according to an integrated authentication system using electronic contract form suggests the following improvements.
(1) The present invention seeks to provide an integrated authentication system using electronic contract form by which the contracting parties make a contract on the mobile terminal.
(2) The present invention seeks to provide an integrated authentication system using electronic contract form which reflects the real offline contract form.
(3) The present invention seeks to provide an integrated authentication system using electronic contract form which is modifiable.
(4) The present invention seeks to provide an integrated authentication system which can attach various evidences verifying the conclusion of contract.
(5) The present invention seeks to provide an integrated authentication system by which the contracting parties can confirm the contents of the electronic contract and can ascertain the conclusion of the contract by e-mail or cell phone authentication.
(6) The present invention seeks to provide an integrated authentication system which can communicate data of the electronic contract input by contracting parties with a server.

The suggested improvements of the present invention are not limited by the description above, and other improvements which are not described could be understood by a skilled artisan as follows.

### [Solution to the Problem]

The present invention is the integrated authentication system managing a process of electronically concluding a contract, the integrated authentication system comprising: an electronic contract form for electronically concluding a contract; the mobile terminal for downloading the electronic contract from an integrated authentication server, concluding a contract electronically by using the electronic contract form, and transferring the concluded electronic contract form to the integrated authentication server; and the integrated authentication server for transferring the electronic contract form to the mobile terminal, receiving the concluded electronic contract form from the mobile terminal, and managing the process of electronically concluding a contract, wherein the integrated authentication server comprises: a form design unit for creating the electronic contract form by imaging a contract form, and designing the style of the electronic contract form; a log-in managing unit for authorizing the mobile terminal and a user of the mobile terminal; and a form-transferring unit for transferring the electronic contract form designed by the form design unit to the mobile terminal.
The electronic contract of the present invention comprises: a meta-data part corresponding to a contract information inputted by the user of the mobile terminal; an imaged part imaged from the style of the contract form; and a contract verification part including an evidence for certifying a contract conclusion, wherein the meta-data part is overlaid on the imaged part, and wherein the contract verification part is overlaid on the imaged part.
The contract verification part of the present invention comprises at least one selected from the group consisting of a voice, a picture and a fingerprint.
The integrated authentication server of the present invention further comprises a transcoding unit for transcoding a codec of the voice, picture stored in the integrated authentication server to be compatible with the mobile terminal which does not support the codec of the voice or the picture stored in the integrated authentication server.
The integrated authentication server of the present invention further comprises a time stamp unit which checks whether the electronic contract form is counterfeited or altered by using a certificate check module of a certification authority server if the mobile terminal receives a certificate of the electronic contract form from the certification authority server.
The mobile terminal of the present invention comprises a cryptographic module for encrypting the concluded electronic contract form; and wherein the integrated authentication server further comprises a deciphering unit for deciphering the encrypted concluded electronic contract form.
The mobile terminal of the present invention further comprises a contract-confirming unit for sending a certification number to both contracting parties' cell phone or e-mail address after completing filling the electronic contract form, receiving the certification number from the contracting parties, and completing the conclusion of the contract.
8. The integrated authentication system according to Claim 7, wherein the integrated authentication server further comprises a contract conclusion-notifying unit for notifying the conclusion of the contract to the contract parties and person interested after the completion of the conclusion of the contract.
The contract conclusion-notifying unit of the present invention notifies the conclusion of the contract via a cell phone massage.
The form design unit of the present invention allocates control on the electronic contract form, wherein the control include at least one selected from the group consisting of a text, a check box, a radio button, a list box and a signature and wherein the user of the mobile terminal can modify the design of the electronic contract form by relocating the controls and modify a property of the control.
The controls of the present invention have a correlation therebetween.
Each of the controls of the present invention has a data-entry rule.
The present invention further comprises a distribution storage unit for storing the data of the integrated authentication server.
The present invention further comprises an external storage unit for storing the data of the integrated authentication server.

The electronic contract of the present invention further comprises an e-signature part for after writing a signature of contractor adjusting the size of the signature into a pre-determined size and overlaying the size adjusted signature on a signature area of the electronic contract form.

### [Advantageous Effect of the Invention]

The present invention according to the integrated authentication system using electronic contract including the above constitutions has the effect as follows.
(1) As the electronic contract is concluded through the mobile terminal by downloading the electronic contract form from the server, the contracting parties have advantageous effects, i) requiring no real contract form, ii) storing the contract conveniently, and iii) making a contract while moving without any desktop PC.
(2) The present invention can diminish the sense of difference between the real contract form and the electronic contract form by reflecting the real offline contract form by imaging it.
(3) The present invention can apply various contents of the contract by modifying the style of the electronic contract.
(4) The present invention can verify the conclusion of the contract by attaching various evidences to the electronic contract.
(5) The contracting parties using the present invention can confirm the content of the contract and the conclusion of the contract by notification via SMS or e-mail.
(6) The present invention can decrease consumption of data and data traffic by transferring and storing only the data input by the contracting parties.

The effects of the present invention are not limited by the description above, and other effects which are not described could be understood by a skilled artisan as follows.

### [Brief Description of the Drawings]

Fig. 1 illustrates a block diagram for an integrated authentication system using an electronic contract form according to an embodiment of the present invention.
Fig. 2 illustrates the start-up screen of the application operated by the mobile terminal according to an embodiment of the present invention.
Fig. 3 illustrates the screen of the application operated by the mobile terminal for selecting each server of the integrated authentication server and logging in the selected server.
Fig. 4 illustrates the screen of the application operated by the mobile terminal displaying the lists of the electronic contract forms for selecting a type of electronic contract, according to an embodiment of the present invention.
Fig. 5 illustrates the electronic contract form of the mobile terminal, according to an embodiment of the present invention.
Fig. 6 illustrates the electronic contract form of the mobile terminal showing the controls, according to an embodiment of the present invention.
Fig. 7 illustrates the electronic contract form of the mobile terminal showing check marks on checkboxes and radio buttons, according to an embodiment of the present invention.
Fig. 8 illustrates the screen of the mobile terminal showing a signature area for signing on the electronic contract form, according to an embodiment of the present invention.
Fig. 9 illustrates the screen of the mobile terminal where the signatures of the contracting parties are overlaid on the electronic contract form, according to an embodiment of the present invention.
Fig. 10 illustrates the screen of the mobile terminal showing a panel for touching a proof button positioned on the top of the electronic contract in order to take a picture or record a voice, according to an embodiment of the present invention.
Fig. 11 illustrates the screen of the mobile terminal for taking a picture, according to an embodiment of the present invention.
Fig. 12 illustrates the screen of the mobile terminal for downsizing the picture and overlaying it on the electronic contract, according to an embodiment of the present invention.
Fig. 13 illustrates the screen of the mobile terminal showing a voice-recording panel for recording a voice by using the mobile terminal, according to an embodiment of the present invention.
Fig. 14 illustrates the screen of the mobile terminal for showing the fingerprint to be detected by the mobile terminal, according to an embodiment of the present invention.
Fig. 15 illustrates the screen of the mobile terminal for showing the detected fingerprint by the mobile terminal, according to an embodiment of the present invention.
Fig. 16 illustrates the screen of the mobile terminal for downsizing the fingerprint and overlaying it on the electronic contract, according to an embodiment of the present invention.
Fig. 17 illustrates the screen of the mobile terminal for showing its process of transferring the electronic contract form to the integrated authentication server, according to an embodiment of the present invention.
Fig. 18 illustrates the log-in screen of the integrated authentication server, according to an embodiment of the present invention.
Fig. 19 illustrates the screen of form lists of the electronic contract in the integrated authentication server, according to an embodiment of the present invention.
Fig. 20 illustrates the screen for inputting the information about the form of the electronic contract, according to an embodiment of the present invention.
Fig. 21 illustrates the screen for categorizing the electronic contracts in the integrated authentication server, according to an embodiment of the present invention.
Fig. 22 illustrates a panel for uploading the image files of the electronic contract form in the integrated authentication server according to an embodiment of the present invention.
Fig. 23 illustrates the screen for uploading the image files of the electronic contract form to the integrated authentication server, according to an embodiment of the present invention.
Fig. 24 illustrates the screen showing the uploaded image files of the electronic contract form in the integrated authentication server, according to an embodiment of the present invention.
Fig. 25 illustrates the uploaded image of the electronic contract form in the integrated authentication server, according to an embodiment of the present invention.
Fig. 26 illustrates the screen for modifying the controls and the properties of the controls of the electronic control in the integrated authentication server, according to an embodiment of the present invention.
Fig. 27 illustrates the screen for directly filling out the contents of the electronic contract in the integrated authentication server independently of the image of the electronic contract, according to an embodiment of the present invention.
Fig. 28 illustrates the screen of the integrated authentication server for showing the electronic contract transferred from the mobile terminal, according to an embodiment of the present invention.
Fig. 29 illustrates the screen wherein the image for verifying the authenticity of the contract overlays on the electronic contract transferred from the mobile terminal, according to an embodiment of the present invention.
Fig. 30 illustrates the screen of the integrated authentication server for examining the electronic contract, according to an embodiment of the present invention.
Fig. 31 illustrates the screen of the integrated authentication server showing the list of the examined electronic contracts, according to an embodiment of the present invention.
Fig. 32 illustrates the screen of the integrated authentication server showing the list of the concluded electronic contracts according to an embodiment of the present invention.

### [Mode for the Invention]

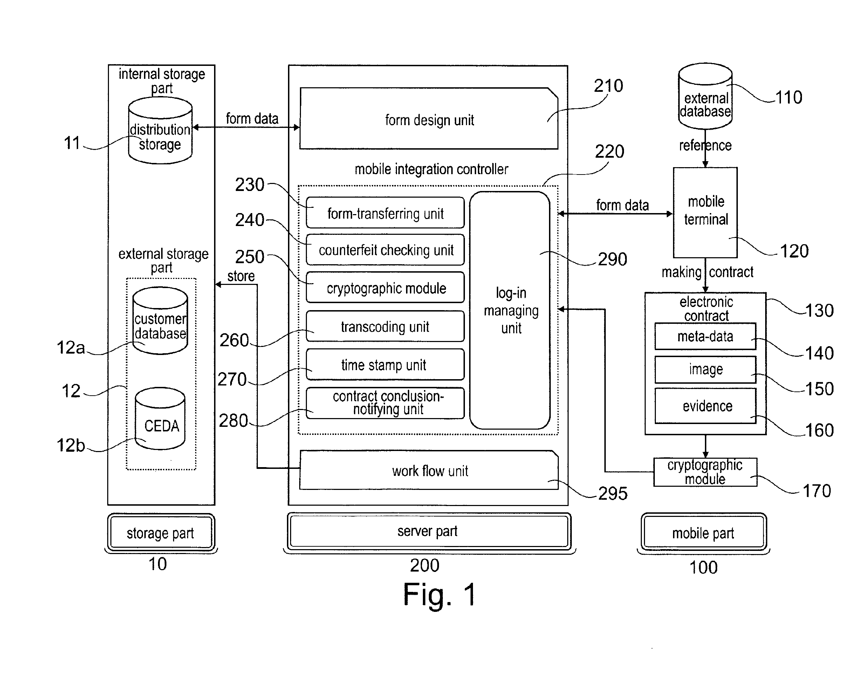

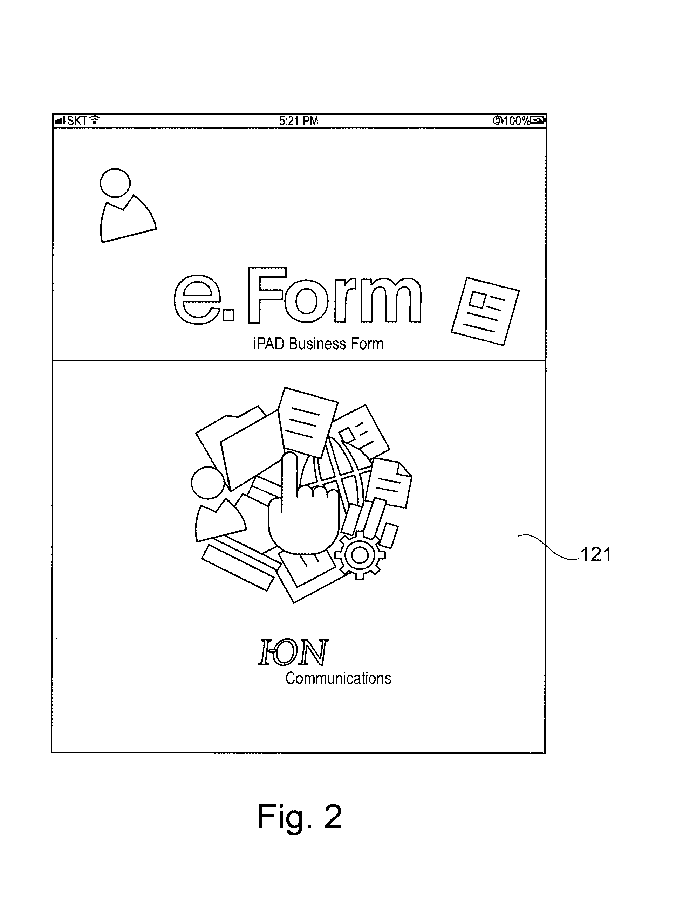

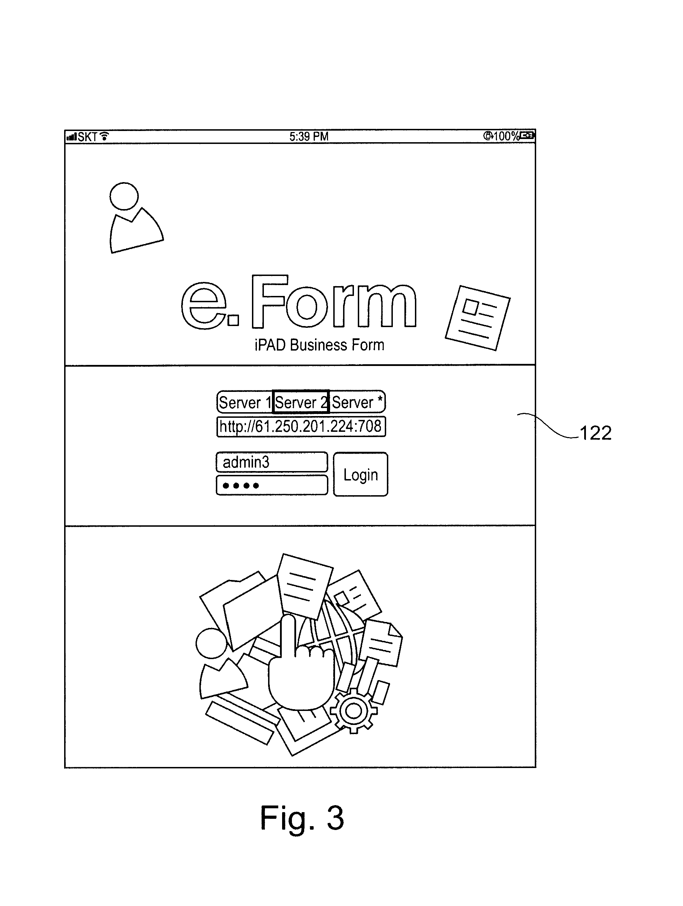

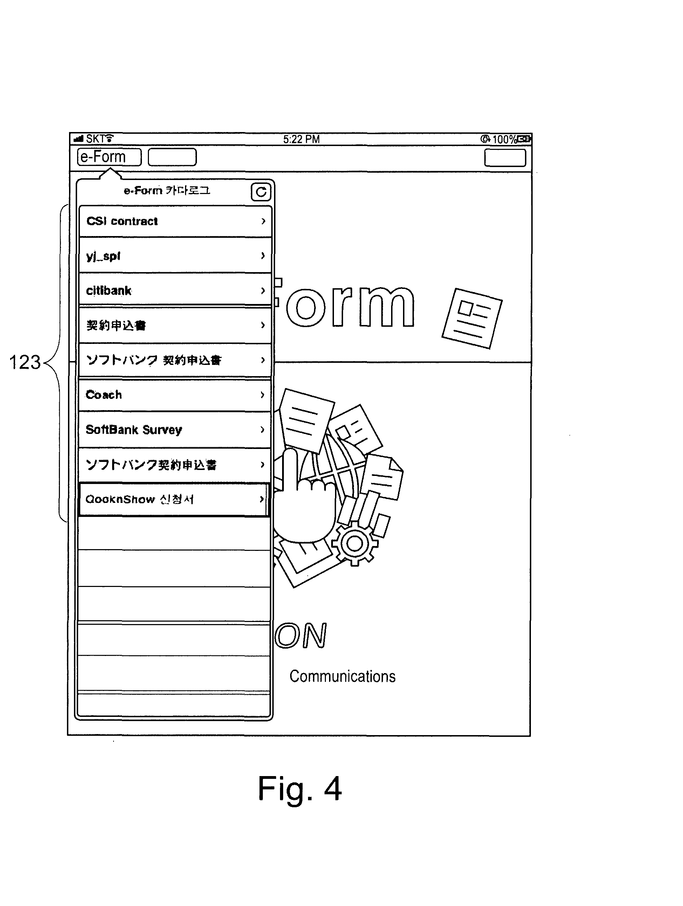

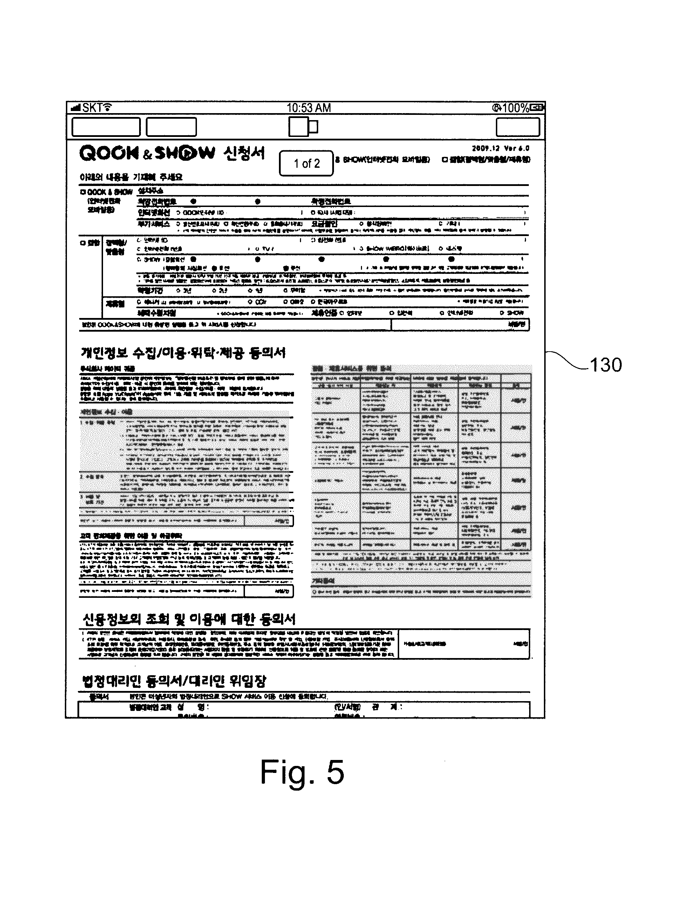

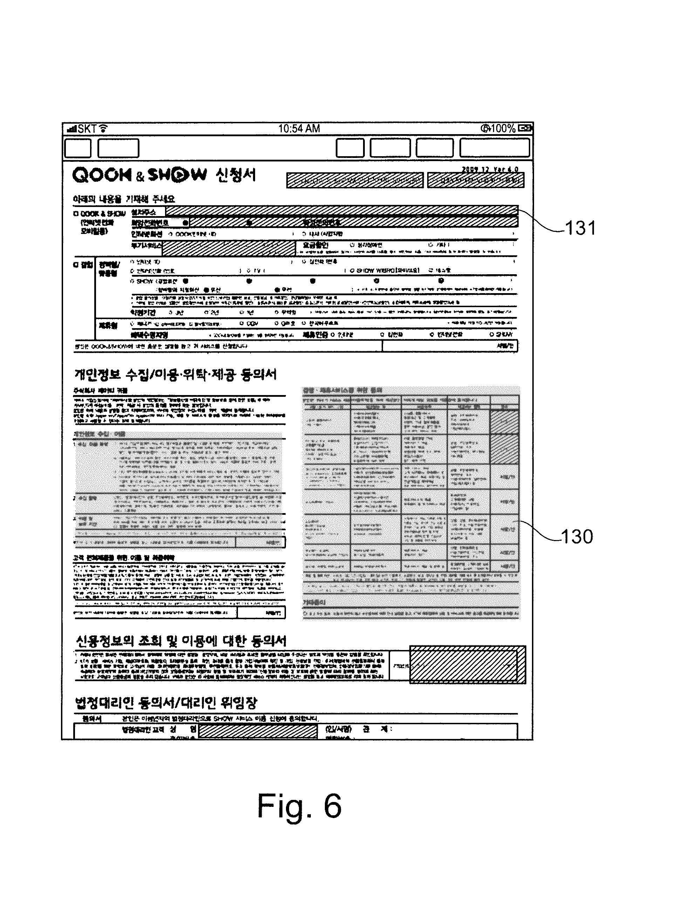

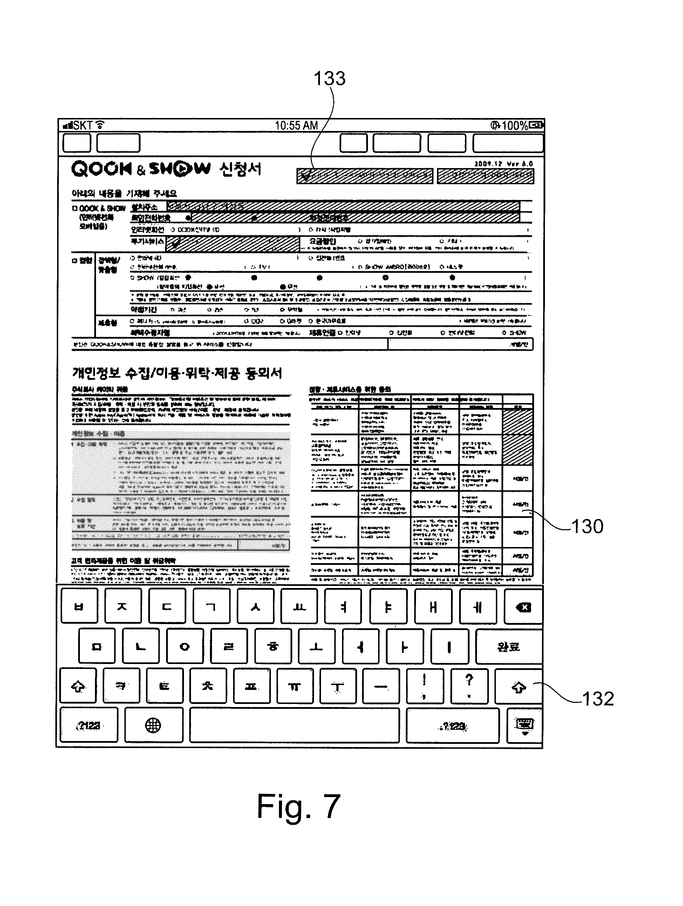

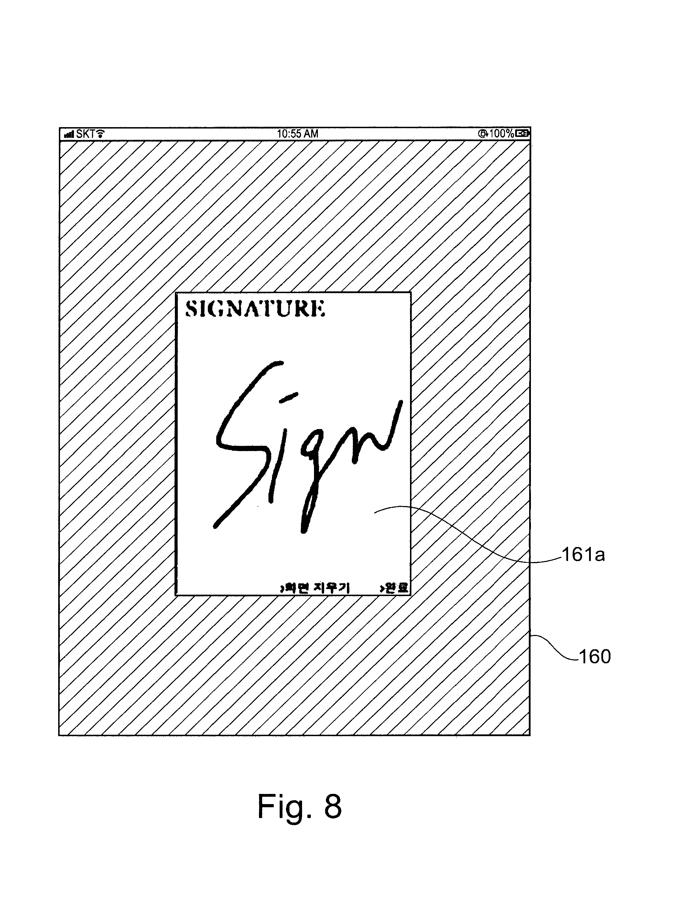

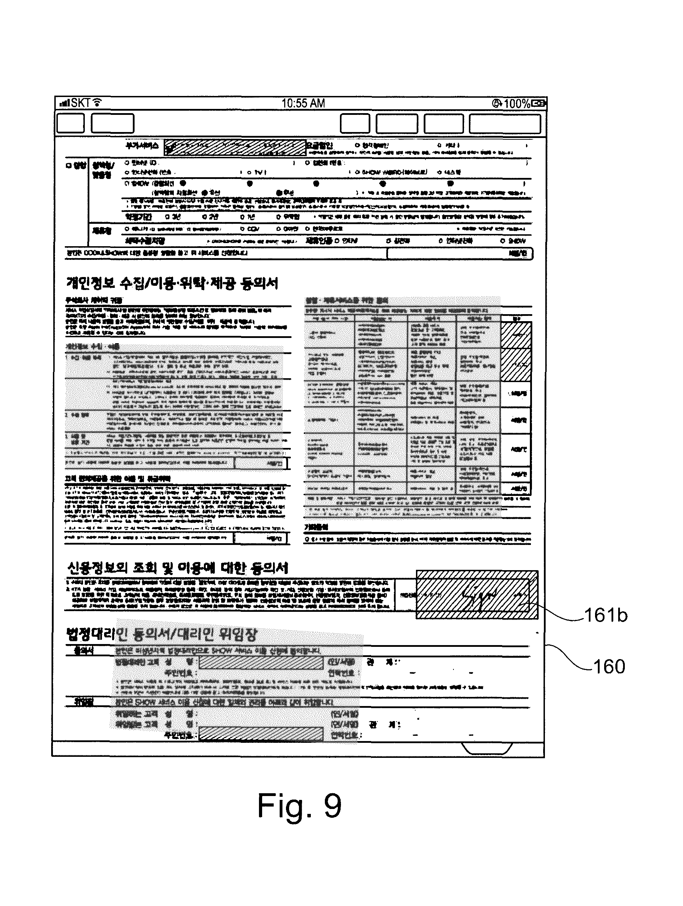

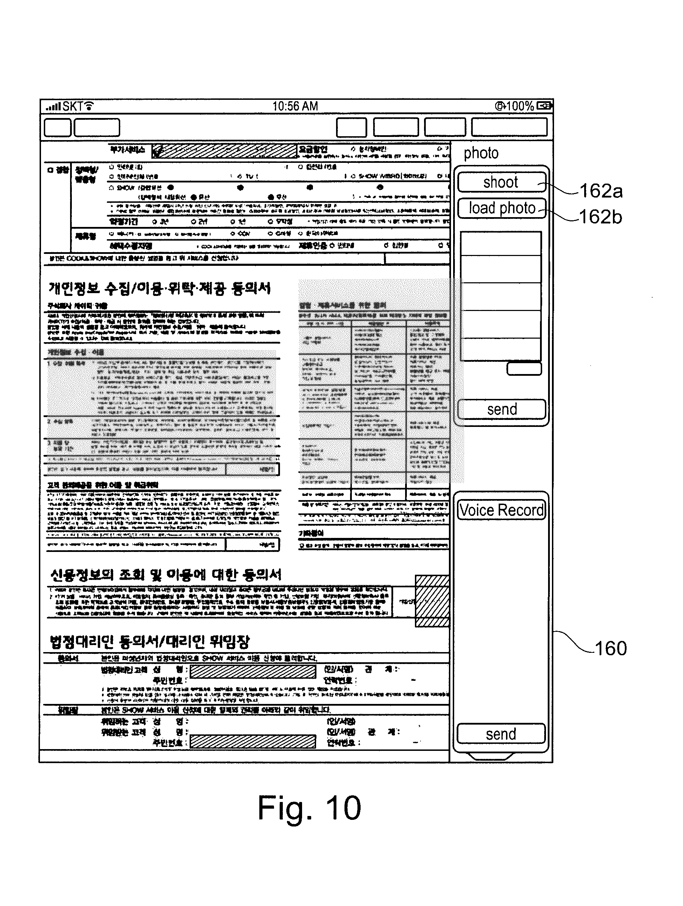

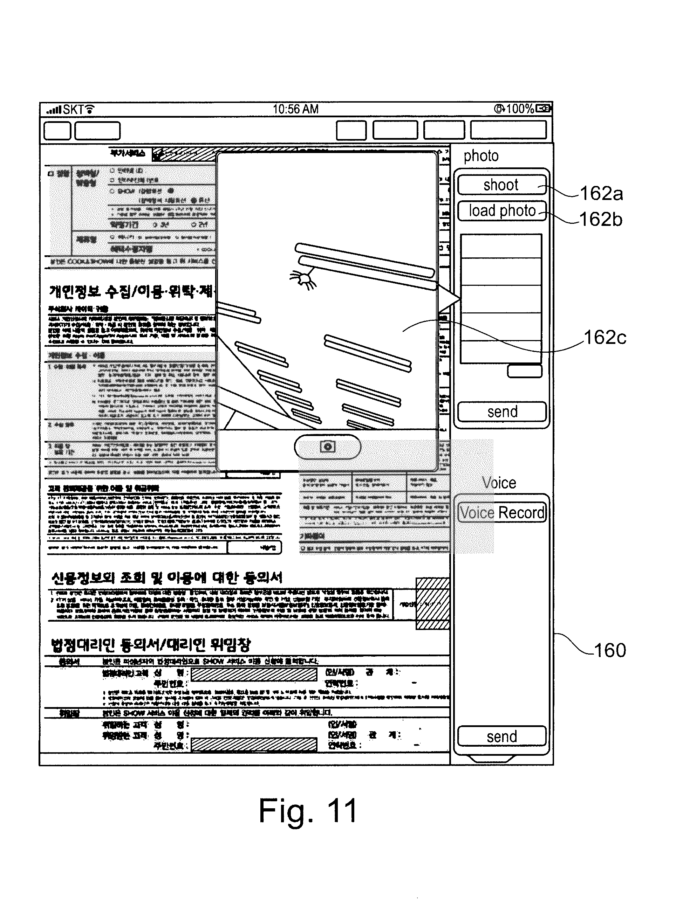

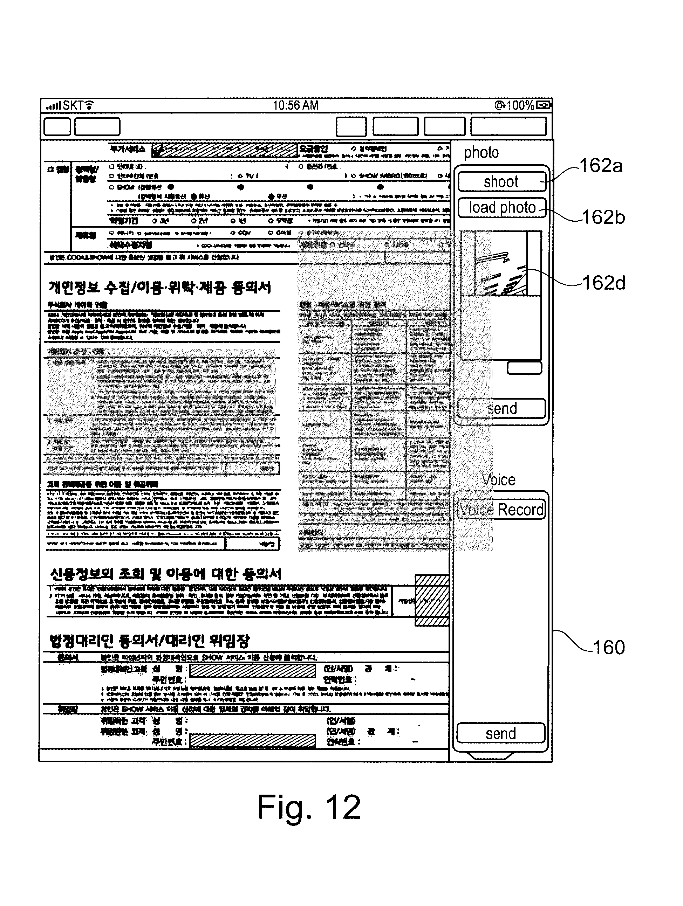

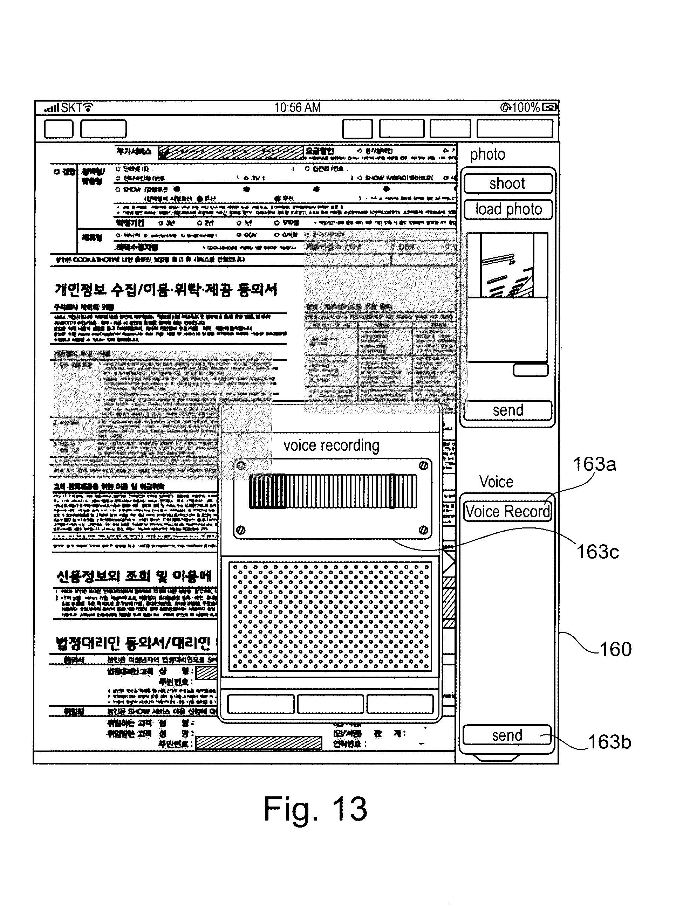

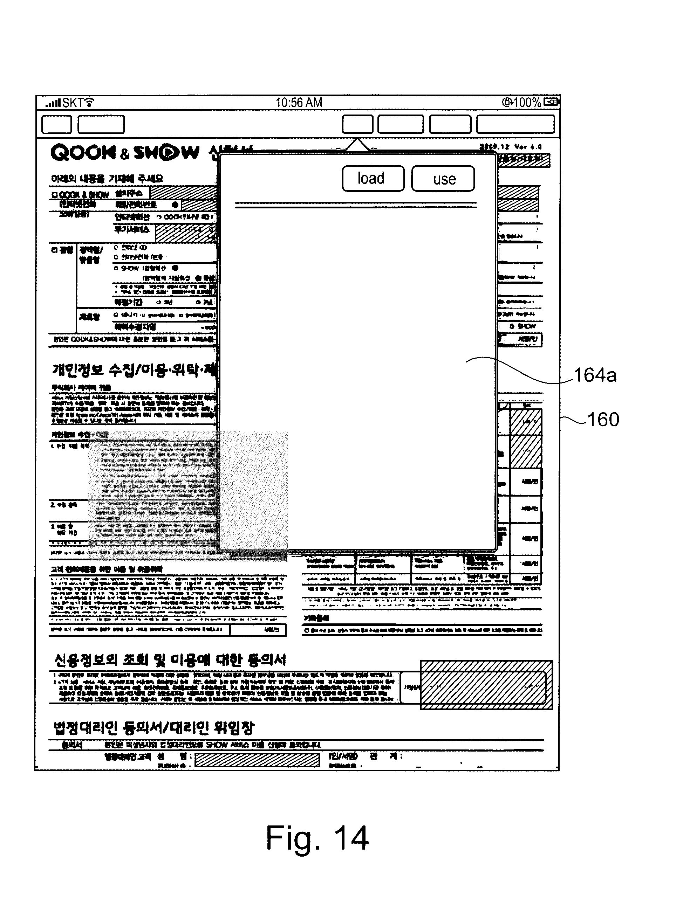

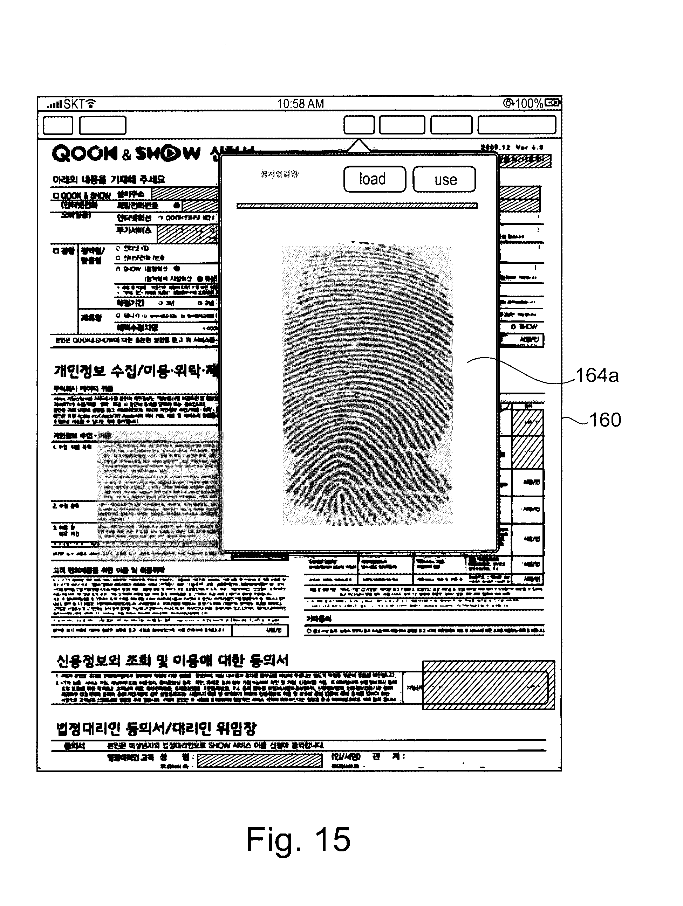

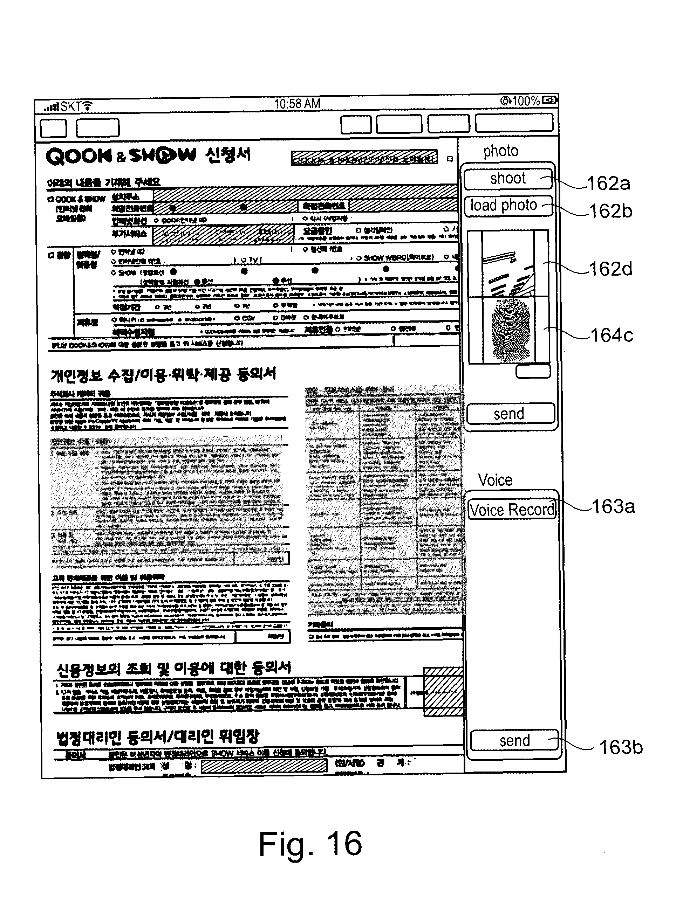

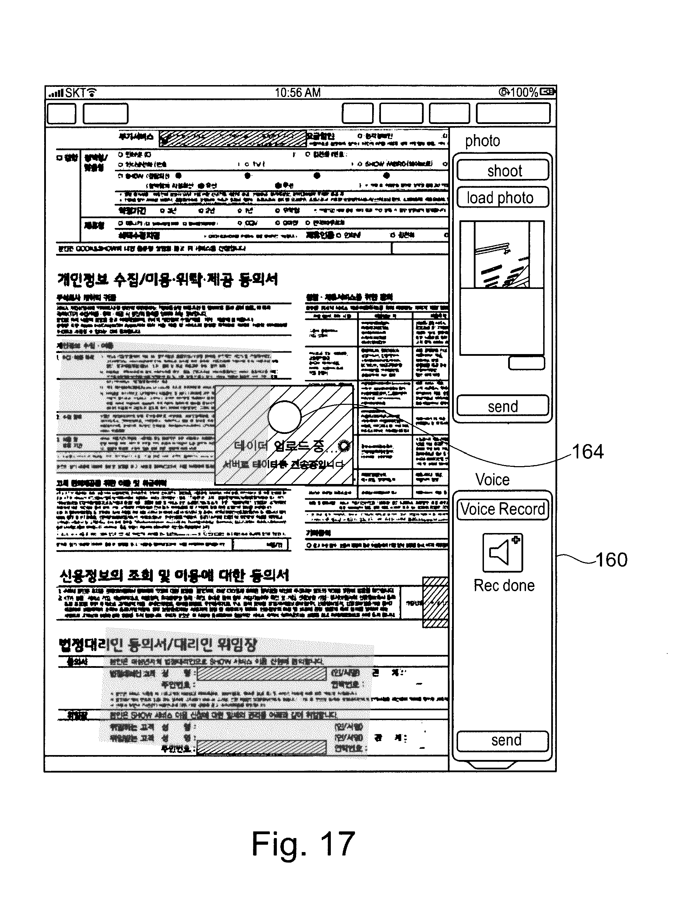

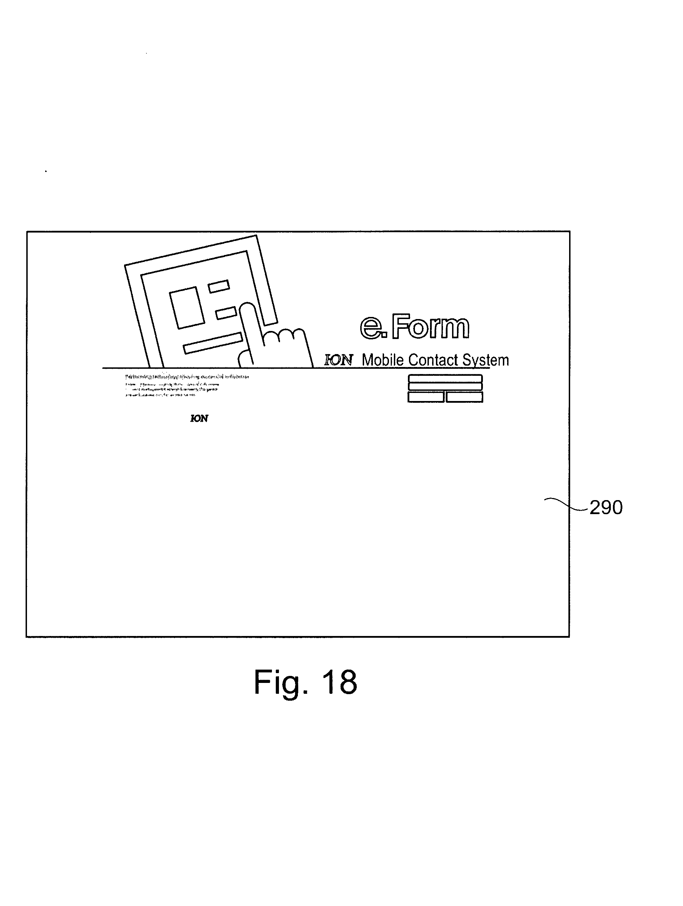

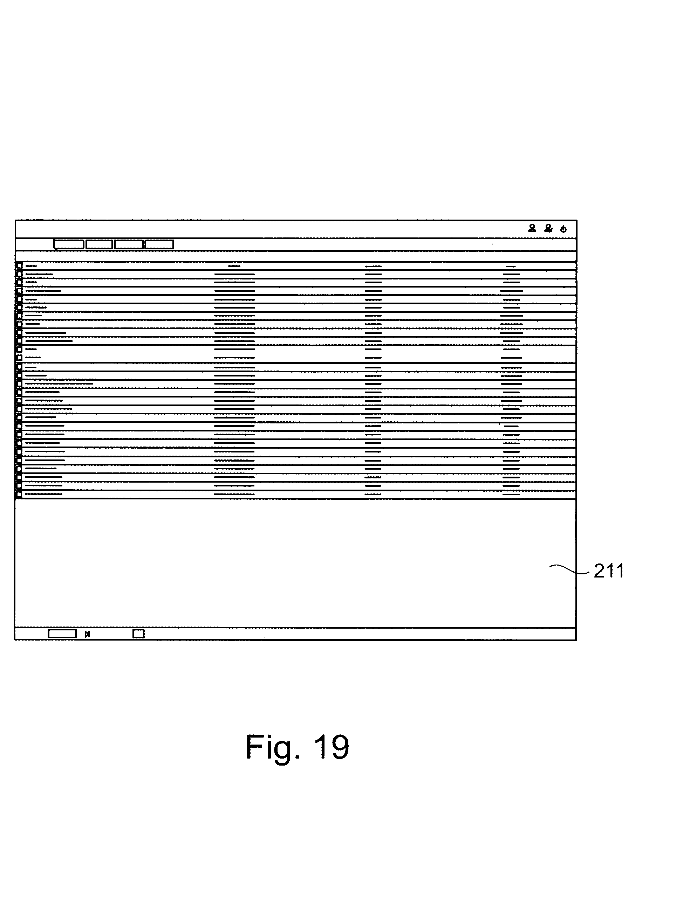

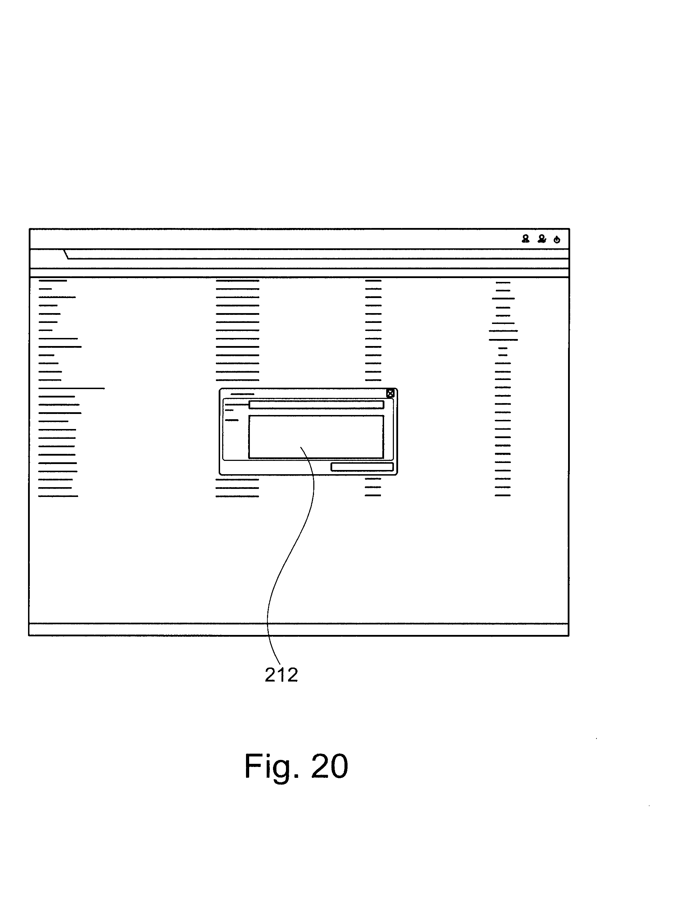

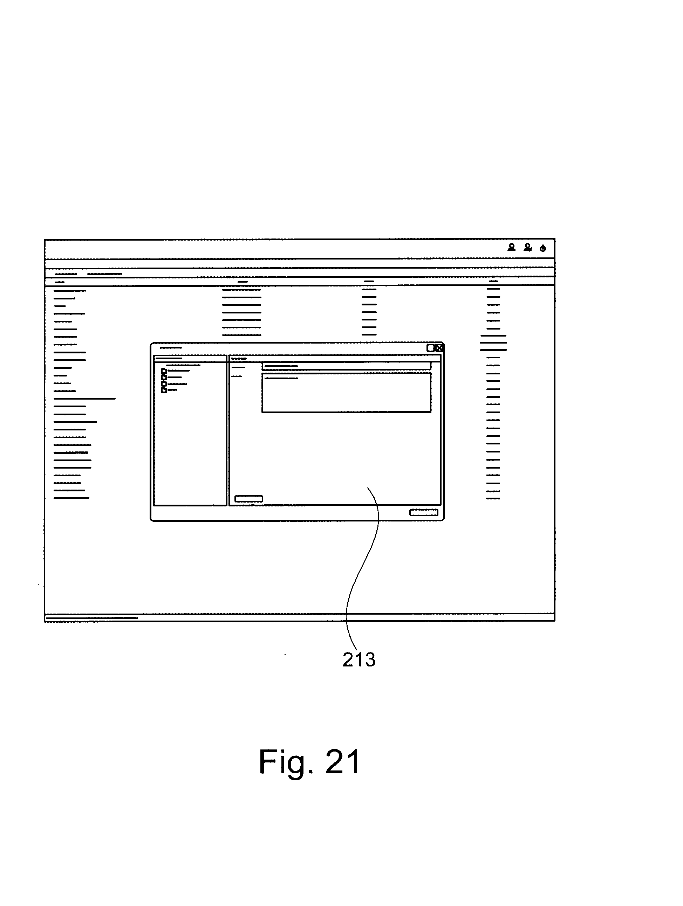

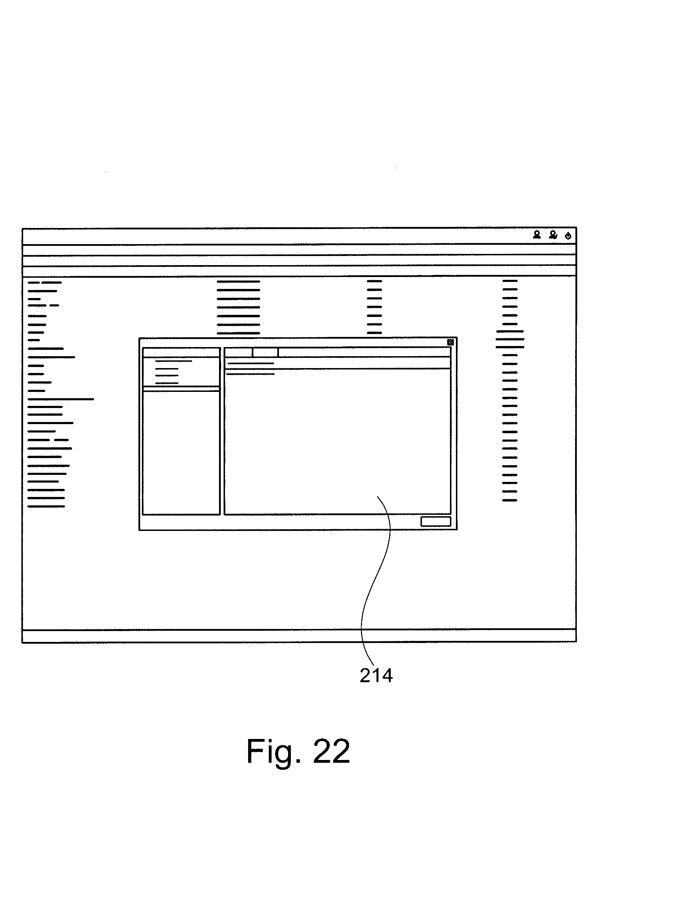

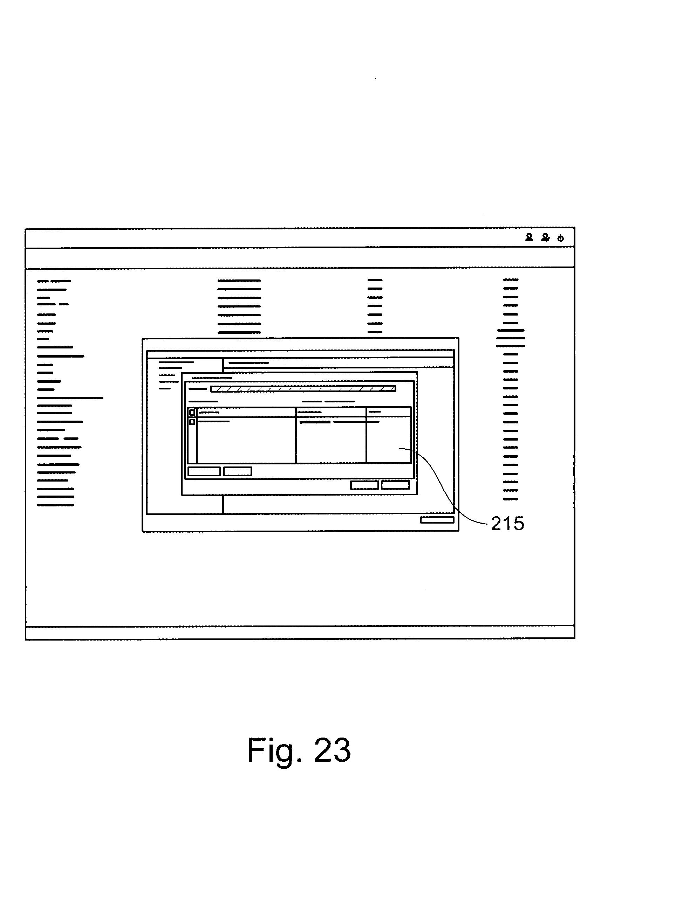

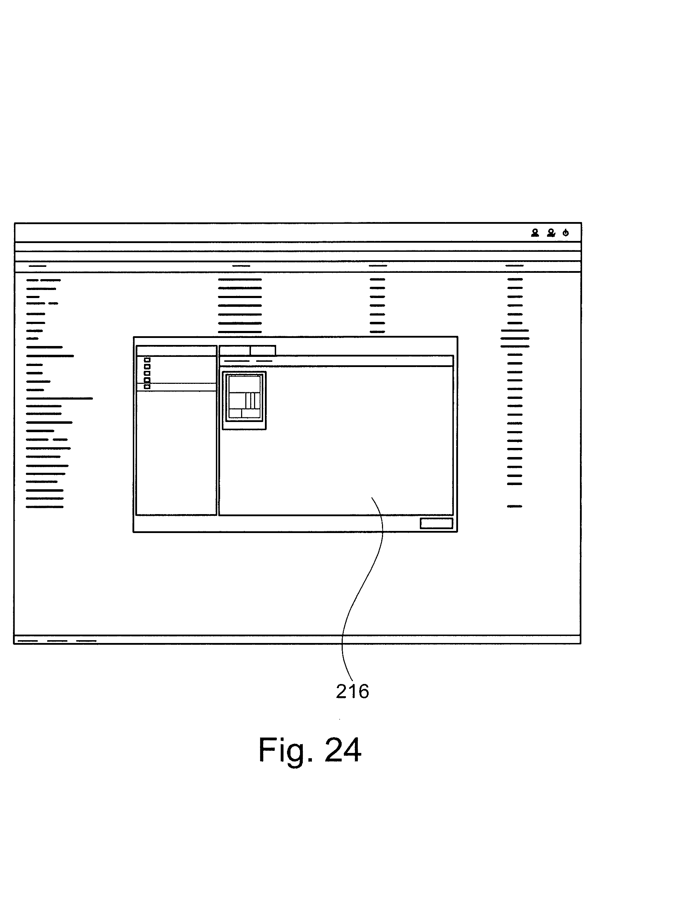

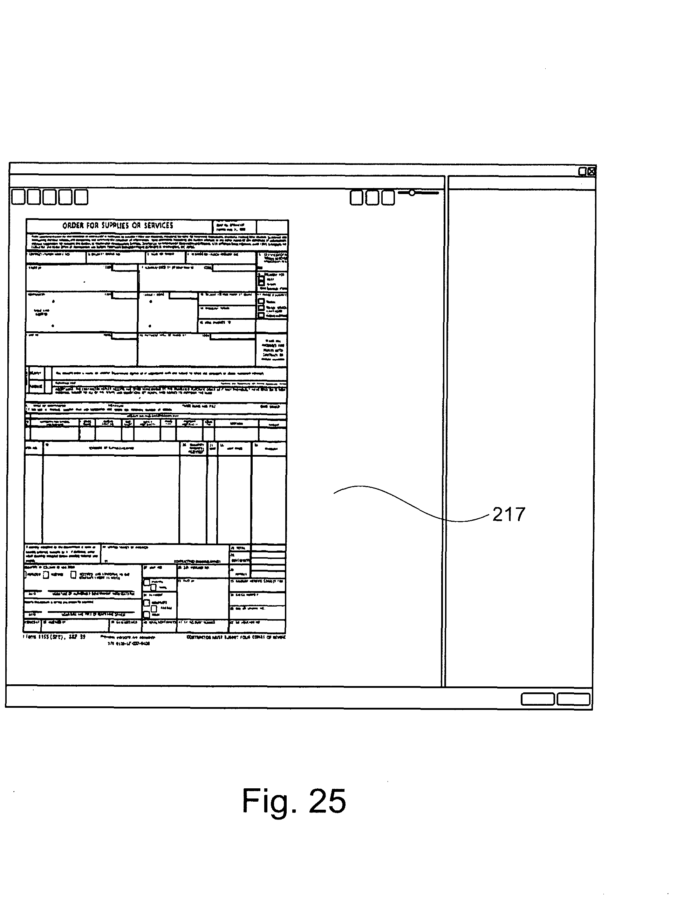

Fig. 1 illustrates a block diagram for an integrated authentication system using an electronic contract form according to an embodiment of the present invention. Fig. 2 illustrates the start-up screen of the application operated by the mobile terminal according to an embodiment of the present invention. Fig. 3 illustrates the screen of the application operated by the mobile terminal for selecting each server of the integrated authentication server and logging in the selected server. Fig. 4 illustrates the screen of the application operated by the mobile terminal displaying the lists of the electronic contract forms for selecting a type of electronic contract, according to an embodiment of the present invention. Fig. 5 illustrates the electronic contract form of the mobile terminal, according to an embodiment of the present invention. Fig. 6 illustrates the electronic contract form of the mobile terminal showing the controls, according to an embodiment of the present invention. Fig. 7 illustrates the electronic contract form of the mobile terminal showing check marks on checkboxes and radio buttons, according to an embodiment of the present invention. Fig. 8 illustrates the screen of the mobile terminal showing a signature area for signing on the electronic contract form, according to an embodiment of the present invention. Fig. 9 illustrates the screen of the mobile terminal where the signatures of the contracting parties are overlaid on the electronic contract form, according to an embodiment of the present invention. Fig. 10 illustrates the screen of the mobile terminal showing a panel for touching a proof button positioned on the top of the electronic contract in order to take a picture or record a voice, according to an embodiment of the present invention. Fig. 11 illustrates the screen of the mobile terminal for taking a picture, according to an embodiment of the present invention. Fig. 12 illustrates the screen of the mobile terminal for downsizing the picture and overlaying it on the electronic contract, according to an embodiment of the present invention. Fig. 13 illustrates the screen of the mobile terminal showing a voice-recording panel for recording a voice by using the mobile terminal, according to an embodiment of the present invention. Fig. 14 illustrates the screen of the mobile terminal for showing the fingerprint to be detected by the mobile terminal, according to an embodiment of the present invention. Fig. 15 illustrates the screen of the mobile terminal for showing the detected fingerprint by the mobile terminal, according to an embodiment of the present invention. Fig. 16 illustrates the screen of the mobile terminal for downsizing the fingerprint and overlaying it on the electronic contract, according to an embodiment of the present invention. Fig. 17 illustrates the screen of the mobile terminal for showing its process of transferring the electronic contract form to the integrated authentication server, according to an embodiment of the present invention. Fig. 18 illustrates the log-in screen of the integrated authentication server, according to an embodiment of the present invention. Fig. 19 illustrates the screen of form lists of the electronic contract in the integrated authentication server, according to an embodiment of the present invention. Fig. 20 illustrates the screen for inputting the information about the form of the electronic contract, according to an embodiment of the present invention. Fig. 21 illustrates the screen for categorizing the electronic contracts in the integrated authentication server, according to an embodiment of the present invention. Fig. 22 illustrates a panel for uploading the image files of the electronic contract form in the integrated authentication server according to an embodiment of the present invention. Fig. 23 illustrates the screen for uploading the image files of the electronic contract form to the integrated authentication server, according to an embodiment of the present invention. Fig. 24 illustrates the screen showing the uploaded image files of the electronic contract form in the integrated authentication server, according to an embodiment of the present invention. Fig. 25 illustrates the uploaded image of the electronic contract form in the integrated authentication server, according to an embodiment of the present invention.

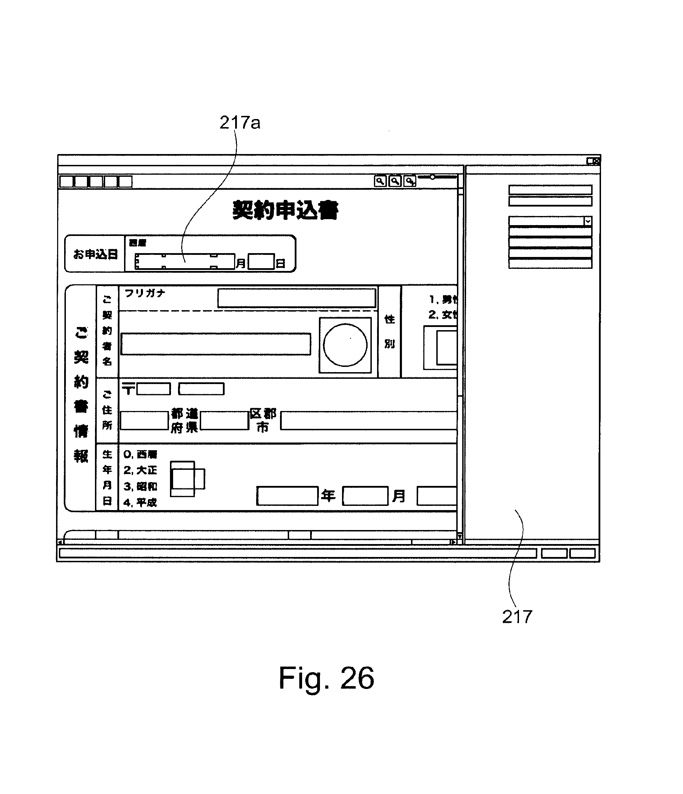

Fig. 26 illustrates the screen for modifying the controls and the properties of the controls of the electronic control in the integrated authentication server, according to an embodiment of the present invention.

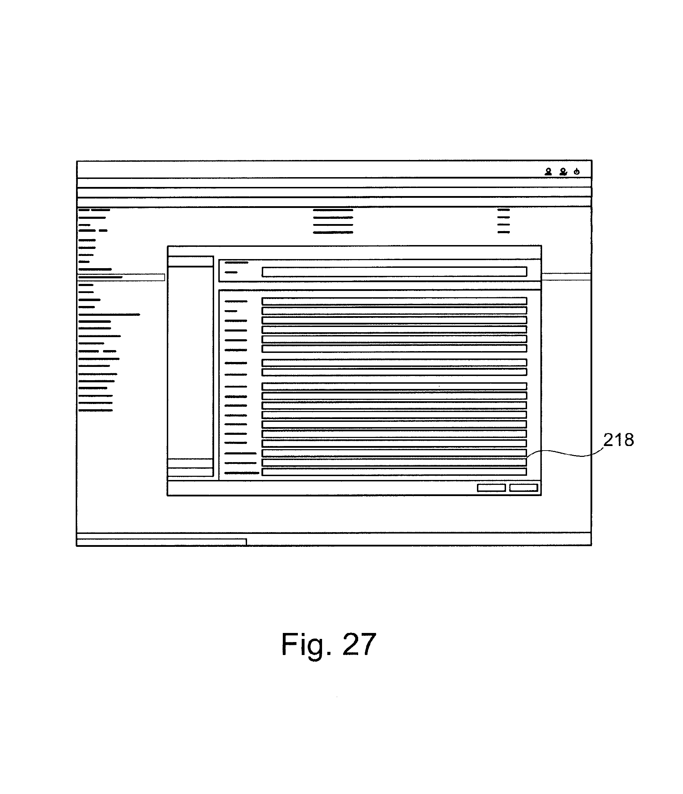

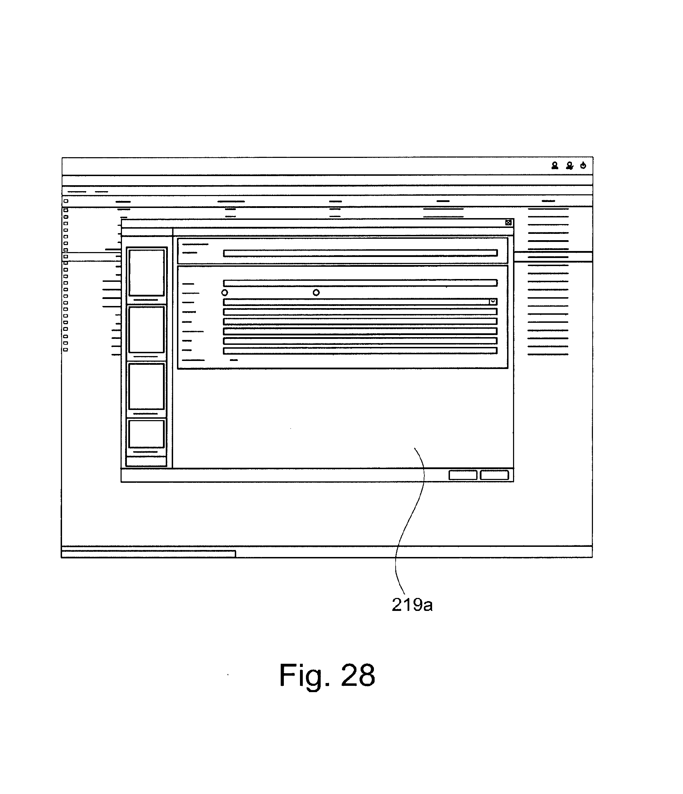

Fig. 27 illustrates the screen for directly filling out the contents of the electronic contract in the integrated authentication server independently of the image of the electronic contract, according to an embodiment of the present invention. Fig. 28 illustrates the screen of the integrated authentication server for showing the electronic contract transferred from the mobile terminal, according to an embodiment of the present invention.

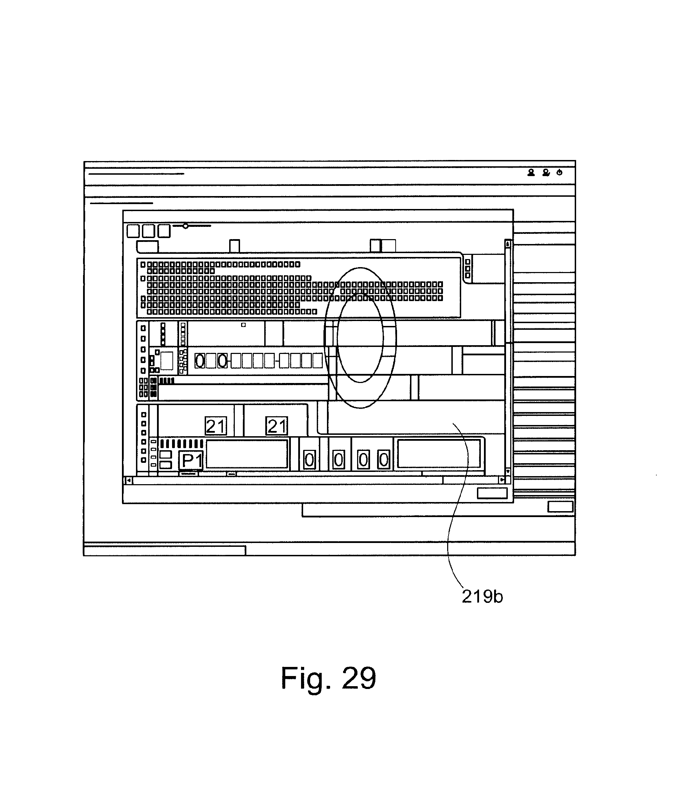

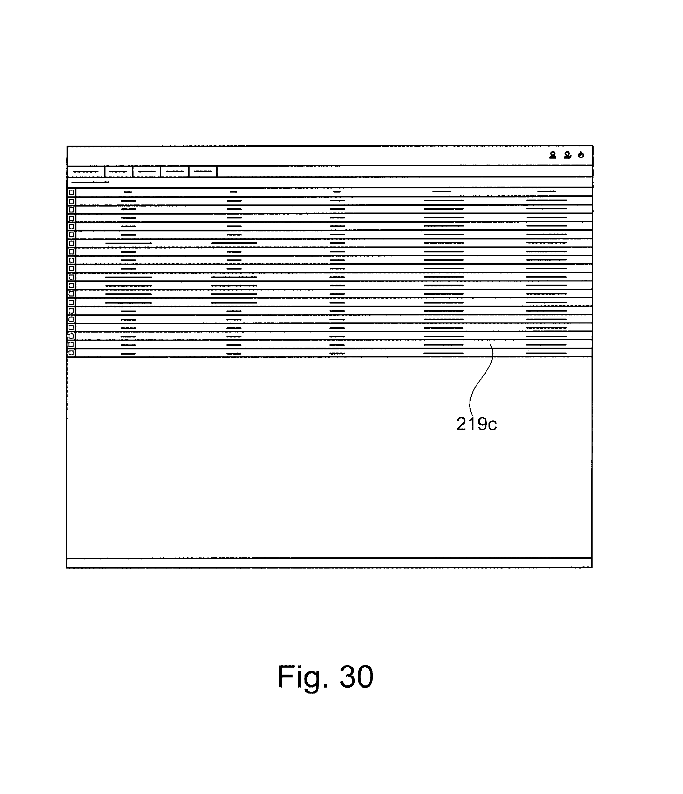

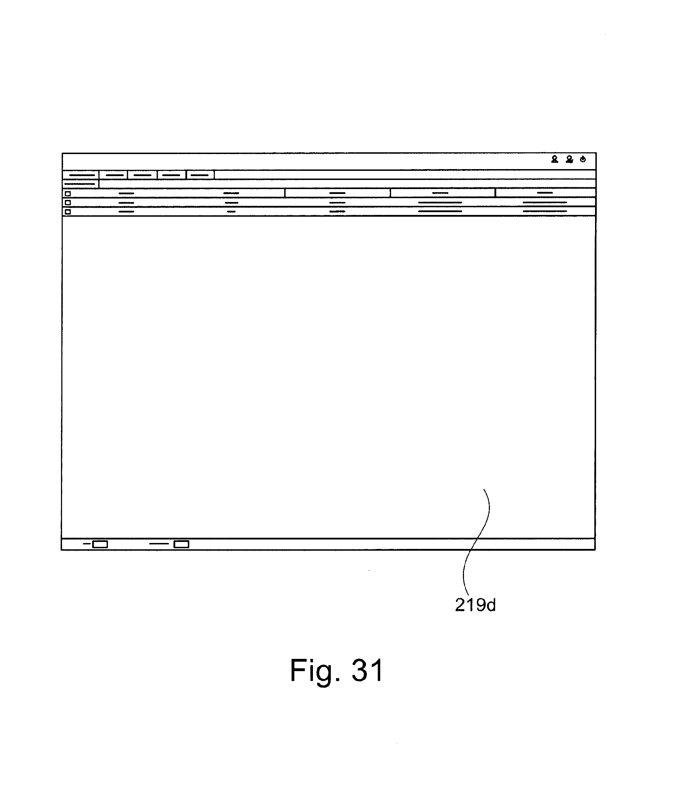

Fig. 29 illustrates the screen wherein the image for verifying the authenticity of the contract overlays on the electronic contract transferred from the mobile terminal, according to an embodiment of the present invention. Fig. 30 illustrates the screen of the integrated authentication server for examining the electronic contract, according to an embodiment of the present invention. Fig. 31 illustrates the screen of the integrated authentication server showing the list of the examined electronic contracts, according to an embodiment of the present invention.

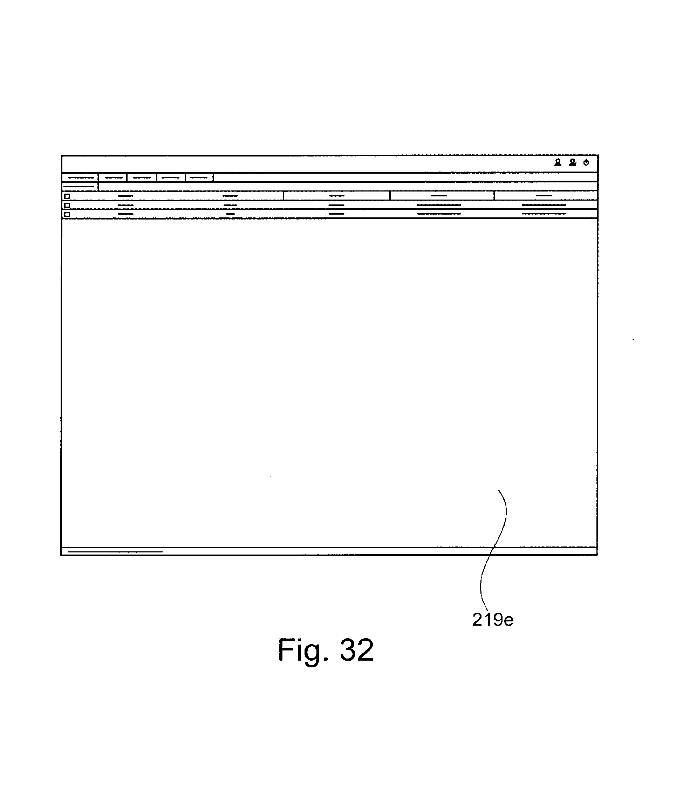

Fig. 32 illustrates the screen of the integrated authentication server showing the list of the concluded electronic contracts according to an embodiment of the present invention.

The present invention according to the integrated authentication system using an electronic contract comprises an electronic contract form 130; a mobile terminal 120; and an integrated authentication server 200.

The mobile terminal 120 referred to in this specification could be tablet PCs, for example, iPad of Apple Inc. or Galaxy Tab of Samsung Inc. The mobile terminal 120 of the present invention was implemented by the iPad as an example. However, the scope of the present invention should not be restricted by the kinds of mobile terminal 120, and laptops or other types of tablet PCs should be included in the mobile terminal 120 of the present invention because the mobile terminal 120 is implemented by the iPad in terms of its portability and convenience.

The electronic contract 130 refers to an electronic document which makes an electronic contract by the contracting parties. The electronic contract 130 comprises a meta-data part 140; an imaged part 150; and a contract verification part 160.

The imaged part 150 of the electronic contract form 130 means the image of the electronic contract form 130. The image can be downloaded from a form-transferring unit 230. The image 150 of the electronic contract form 130 can be made by picturing a real contract by using the camera of the mobile terminal 120.

The meta-data part 140 means the information about the contracting parties, the contents of the contract, etc. filled out in the electronic contract. The meta-data part 140 would be input by the contracting parties and the person interested, and could be received from the integrated authentication server 200 in advance.

The design of the start-up screen illustrated in Fig. 2 could be modified by a skilled artisan who would implement this present invention in accordance with his or her preference.

The integrated authentication server 200 could have several servers in accordance with its properties or capacity. Fig. 3 is the log-in screen of the application connected to the integrated authentication server. The users of the mobile terminal 120, or the contracting parties, can log into the integrated authentication server 200 by entering an ID and a password, and then the log-in managing unit 290 confirms the log-in.

The user of the mobile terminal 120, as illustrated in Fig. 4, selects an electronic contract form by opening the list window of electronic contracts in order to bring an electronic contract form in accordance with the kind of contract to be made.

Being selected to be made an electronic contract form 130 in accordance with the kind of contract, the electronic contract form 130 is displayed on the screen of the mobile terminal 120. As an example, Fig. 5 illustrates an application form for "QOOK & SHOW" of KT Inc. The mobile terminal 120 of the present invention uses iPad of Apple Inc., and enlarging and downsizing the window of the screen can be implemented by using two fingers, and turning the screen over also can be implemented by swiping the screen. If the user touches the button "Fill Form" in the upper-right-hand corner of the screen in Fig. 5, the screen is converted to the mode for inputting meta-data part 140. The controls for inputting meta-data part 140 represent, as illustrated in Fig. 6, yellow color in order to indicate them in a state of entering. If the user touches the yellow control buttons, as illustrated in Fig. 7, the keyboard 132 pops up at the bottom of the screen of the mobile terminal 120, and the user, comprising the contracting parties and the person interested, inputs the meta-data part 140 in the controls by using the keyboard 132. The check boxes and radio buttons are, as illustrated in Fig. 7, checked with the check image 133.

A contract verification part 160 can comprise several evidences for verifying the contract between the contracting parties by using the electronic contract form. The evidences included in the contract verification part 160 can comprise one or more of the voices, pictures or fingerprints. Moreover, if other types of evidences could verify the conclusion of the contract, they could also be evidences. The evidences can be attached to the electronic contract by downloading them from the integrated authentication server or using the mobile terminal 120, and can be overlaid on the contract by downsizing or enlarging them in accordance with the form of the electronic contract.

The voices of the evidences to be included in the contract verification part 160 could comprise various kinds of sound information such as recording the real voices of the contracting parties while making a contract, for verifying the conclusion of the contract by the electronic contract form 130. The real voices can be recorded by using the function of voice recording supported by the mobile terminal 120 while making a contract, or if the mobile terminal 120 does not support the recording function, by using an external apparatus for recording. For the mobile terminal 120, the present invention uses iPad of Apple Inc., and the voices are recorded by using the iPad's recording function.

The pictures of the evidences to be included in the contract verification part 160 can be the files for verifying the conclusion of the contract by picturing the contractor's ID such as a driver's license, passport, etc. The pictures can be, moreover, photo files by picturing the faces of the contracting parties while making a contract. The pictures are taken by the camera of the mobile terminal 120 or received from the integrated authentication server 200 in advance. The picture for verifying the contract is resizable and overlaid on the electronic contract in accordance with the contract form.

The fingerprints of the evidence to be included in the contract verification part 160 are the files for verifying the conclusion of the contract and identifying the contracting parties. If the mobile terminal 120 supports the fingerprint verification technology, the fingerprints of the contracting parties or witnesses can be scanned by using the mobile terminal 120, but if the mobile terminal 120 does not support the fingerprint verification technology, the fingerprints of the contracting parties or witnesses can be scanned by using an external apparatus supporting the fingerprint scan. The present invention uses an external apparatus for scanning the fingerprint because the mobile terminal 120 is an iPad. However, whether the mobile terminal 120 supports the fingerprint verification technology or not, these would fall within the scope of the present invention.

The processes for attaching the pictures, the voices or fingerprints comprised in the contract verification part 160 to the electronic contract form 130 are as follows.

As illustrated in Fig. 10, if the user touches the "roofs" positioned at the top of the electronic contract form 130, the panel for taking a picture or recording a voice is displayed. The "PHOTO" part outlined by black and positioned on the right side of the electronic contract 130 is the area for overlaying the downsized picture, and the "Voice" part is the area for recording the voice of the contracting party and transferring it to the integrated authentication server 200.

If the user of the mobile terminal 120 touches "shoot (162a)" in Figs. 10 and 11, the mobile terminal 120 takes a picture by using the function. As illustrated in Fig. 11, the window (162c) displaying the screen viewed by the camera of the mobile terminal 120 is shown. If the user touches the camera button at the bottom of the window, the mobile terminal 120 takes a picture. As illustrated in Fig. 12, the taken picture is downsized and overlaid on the black-outlined "PHOTO" part of the right part of the electronic contract form 130.

For recording voices, as illustrated in Fig. 13, if the user touches "Voice Record (163a)," the panel for recording voices is displayed. If the mobile terminal 120 supports the recording function, the function for recording is implemented by the mobile terminal 120. However, if the mobile terminal 120 does not support the function, the function for recording can be implemented by an external apparatus for recording voices. Once recording voices for verification is finished, the voice file is stored and transferred to the integrated authentication server 200 by touching "voice transfer (163b)."

As illustrated in Fig. 14, if the user touches the "fingerprint" button positioned at the top of the electronic contract 130, the window 164a for displaying the scanned fingerprint is shown. If the mobile terminal 120 supports the function for scanning fingerprints, the function for scanning fingerprints is implemented by the mobile terminal 120. However, if the mobile terminal 120 does not support the function, the function for scanning can be implemented by an external apparatus for scanning fingerprints. As illustrated in Fig. 14, for the present invention, a fingerprint scanning apparatus is connected to the iPad used for the mobile terminal 120 because the iPad does not support the function for scanning fingerprints. As illustrated in Fig. 15, if the mobile terminal 120 scans the fingerprint, the scanned fingerprint is displayed in the window 164b. The fingerprint can also be downloaded from the integrated authentication server 200 or the mobile terminal 120. For utilizing the scanned fingerprint as an evidence, the user touches the "apply" and downsize the fingerprint and then the fingerprint is overlaid on the right side 164c of the electronic contract.

The present invention, an integrated authentication system using an electronic contract form, can further comprise an e-signature part. If the users, contracting parties, sign on the mobile terminal 120, the signatures are downsized or enlarged to the predetermined size and overlaid on the signature area of the electronic contract form 130.

If the users touch the control "sign," the window for signature is displayed. As illustrated in Fig. 8, the contracting parties can sign on the "signature" window and the signature is, as illustrated in Fig. 8, displayed on the screen of the mobile terminal 120. If the users wish to amend the signatures they have signed, they touch the "delete" button and try to sign again. If the signatures are completed, the users touch the "done" button. If the completed signatures are displayed on the electronic contract form, the signatures signed by the contracting parties are, as illustrated in Fig. 9, downsized (or enlarged) and overlaid on the control "sign."

The contents of the contract are filled in the electronic contract form, and the electronic contract form comprising the evidences or the signature of the contracting parties are transferred to the integrated authentication server 200. As illustrated in Fig. 17, the concluded electronic contract is transferred to the integrated authentication server 200.

The mobile terminal according to the present invention, an integrated authentication system using an electronic contract form, can further comprise a contract-confirming unit (not shown). If the contents of the contract are completed, a certification number is transferred to the contracting parties through their cell phone or e-mail. If the contracting parties input the certification number received from the cell phone or e-mail to the electronic contract form, the contract is concluded.

The integrated authentication server 200 comprises a form design unit 210; a log-in managing unit 290; a form-transferring unit 230 and a counterfeit checking unit 240. Fig. 18 is the start-up screen for connecting to the integrated authentication server 200. The users enter their IDs and passwords and then log in.

The form design unit 210 designs and edits the form of the electronic contract form 130. The form design unit 210 makes an image of the electronic contract. The form design unit 210 places the control on the image of the electronic contract 130. The control comprises one or more of text, check boxes, radio buttons, list boxes or signatures. The control can be replaced arbitrarily by the users, and the properties of the control can be amended.

If the users are connected to the integrated authentication server 200 and click the button for managing the form of the contract, the form list of the electronic contract stored in the integrated authentication server 200 is, as illustrated in Fig. 19, displayed. If the users click the form of the electronic contract and the register button, the screen for inputting information about the electronic contract is, as illustrated in Fig. 20, displayed. If the users input the information about the form of the electronic contact and they click the "store" button positioned at the bottom of the screen 212, the tree of the category comprising the form of the electronic contract is displayed (see 213). The form of the electronic contract is separated in accordance with the basic information, introduction, catalogues or brochures. If the users click items other than the basic information, a panel 214 for uploading the image 150 of the electronic contract is displayed on the right side of the screen. If the users click "file upload" at the top of the panel 214, a control window 215 for uploading files is displayed, and the image 150 of the electronic contract is uploaded. If the users click the "store" button of the control window 215, the image file 150 is uploaded and the uploaded image file 150 is, as illustrated in Fig. 24, downsized and expressed (see 216) in panel 214. If the users double-click the uploaded image 150 expressed in panel 214, a window for placing the controls pops up (see Fig. 25). If the users click the control in the upper-right hand corner in Fig. 25, a control 217a is made. The control 217a is movable and resizable. If placement of the controls is completed, the properties of the controls are amendable. The right side of Fig. 26 is the screen for inputting the properties of controls. The properties can be set up in accordance with the kinds of the controls.

The controls can have correlations therebetween. More specifically, for example, if the contracting parties input the phone number including area code, the state corresponding to the area code is automatically input in the control for inputting the address.

Furthermore, the controls can have a data entry rule. The permissible number of letters can be predetermined and/or whether to permit special characters or not can also be predetermined.

Once the users click the "contract register" in the upper-left hand corner in the form list of the electronic contract, and select a form of the electronic contract and click the button "register," they can input the information of the electronic contract about the form thereof. As illustrated in Fig. 27, if the image 150 of the electronic contract is not made in advance, the contents of the contract can be input in the window 218 for inputting the contents of the electronic contract. The window 218 is displayed for inputting the contents of the contract in accordance with the type of control of the electronic contract.

If the users click "prepare" at the top of the screen in Fig. 19, the list of the electronic contracts which comprises the input contents of the contract sent from the mobile terminal is displayed. As illustrated in Fig. 27, if the users double-click the list of the electronic contracts, the screen 219a showing the specific information of the electronic contracts pops up. The image 150 of the electronic contract, the attached files (photo, fingerprints), and the voice data are displayed on the left side of the screen 219a. The meta-data 140 is displayed on the right side of the screen 219a.

If the users double-click the left image 159 of the screen 219a, the electronic contract which comprises the input contents of the contract is displayed. The electronic contract 219b is one in which the contents input by the contracting parties are overlaid on the image 150 of the electronic contract. As illustrated in Fig. 29, the stamp for authenticity 150 is displayed. The stamp for authenticity 150 is one in which the mobile terminal 120 receives the stamp for authenticity from the KICA (Korea Information Certificate Authority, Inc.), overlays the stamp for authenticity and transfers it to the integrated authentication server 200. The present invention uses the authenticity service from the KICA. However, a skilled artisan who wants to use the present invention can employ other authenticity service companies or other methods, and these other methods to authenticate would fall within the present invention.

If the users select the electronic contract to be examined from the electronic contract list shown at the "prepare" button and select the "examine" button in the upper-left-hand corner of the screen, the electronic contracts selected are displayed at the "examining" button (see Fig. 31). The process for examining the contract proceeds on the order sequence "prepare" → "examining" → "conclusion."

If the users click the list of the electronic contracts to conclude from the list of the electronic contracts displayed at the button "examining" and click the button "pay," the examination is, as illustrated in Fig. 32, completed. The completed electronic contract moves to the list 219e of the completed electronic contract.

The form-transferring unit 230 is an element for transferring the designed electronic contract form 130 from the form design unit 210 to the mobile terminal 120. The communication method wherein the form-transferring unit 230 transfers the designed electronic contract form 130 to the mobile terminal 120 can be 3G, WiFi or 4G. However, these communication methods could be arbitrarily selected by a skilled artisan in accordance with the communication environment. Therefore, the communication methods are not restricted.

The counterfeit checking unit 240 is an element for checking the counterfeit or falsification of the information of the electronic contract to be transferred from the mobile terminal 120. The present invention uses a hash function comparing hash values to check the counterfeit or the falsification. However, a skilled artisan who wants implement the present invention can use other methods such as MD-5 or Kerberos, to check the counterfeit or falsification, and these methods would fall within the present invention.

The log-in managing unit 290 authorizes the mobile terminal 120, and the user's ID and password.

The present invention according to the integrated authentication system using an electronic contract form can further comprise a transcoding unit 260. As described above, the evidences of the verification unit 160 of the electronic contract form 130 can comprise the pictures, and voice files. If the codec of the files is not supported by the mobile terminal 120, the transcoding unit 260 transforms the type of the codec to that which the mobile terminal 120 supports.

The present invention according to the integrated authentication system using an electronic contract can further comprise a time stamp unit 270. As explained above, the mobile terminal 120 receives the image for verifying the authenticity from KICA Inc. and transfers the electronic contract form 130 to the integrated authentication server 200. The time stamp unit 270 of the integrated authentication server 200 checks whether the electronic contract form 130 is counterfeited or falsified by using the certificate check module.

If the contract is concluded by the electronic contract, the contract conclusion notifying unit 280 of the present invention sends notification of the conclusion of the contract to the contracting parties or a person interested. The notification method could be sending an SMS or an e-mail.

The present invention can further comprise a distribution storage unit 11 and an internal storage unit of the integrated authentication server, positioned in the integrated authentication server 200. The distribution storage 11 is an element where various information such as the images of the electronic contract, meta-data, photos, fingerprints and signatures are stored.

The present invention can further comprise an external storage unit 12. The external storage 12 can be a customer database 12a or CEDA (Certified e-Document Authority) 12b. The customer database 12a is a database in which a skilled artisan could independently store the customer information about the contracting parties or other databases. The CEDA 12b is a government's assigned organization with public confidence that performs various works regarding electronic documents such as storing electronic documents safely for users and verifying the contents of the electronic documents. The integrated authentication server 200 stores documents in and transfers them to or receives them from the CEDA 12b.

The mobile terminal 120 can comprise a cryptographic module 170 for encrypting the concluded electronic contracts. In this case, the integrated authentication server 200 can further comprise a decipherer for deciphering the encrypted electronic contract.

The cryptographic module 170 of the present invention encrypts the concluded electronic contract form 130 by using a 3DES algorithm. The integrated authentication server 200 also deciphers the encrypted electronic contract form 130 by using the 3DES algorithm. Then the integrated authentication server 200 transfers the electronic contract form 130 to the mobile terminal 120 by using the 3DES algorithm.

The present invention according to the integrated authentication system using electronic contracts can have various alterations and examples. The specific examples are shown in the drawings and are specifically detailed in the specification. However, these are not to limit the technical spirit of the present invention. Rather, it should be understood that all alterations, all equivalents or all substitutes are included in the present invention.

## Claims

1. An integrated authentication system managing a process of electronically concluding a contract, the integrated authentication system comprising:
an electronic contract form for electronically concluding a contract;
the mobile terminal for downloading the electronic contract from an integrated authentication server, concluding a contract electronically by using the electronic contract form, and transferring the concluded electronic contract form to the integrated authentication server; and
the integrated authentication server for transferring the electronic contract form to the mobile terminal, receiving the concluded electronic contract form from the mobile terminal, and managing the process of electronically concluding a contract,
wherein the integrated authentication server comprises:
a form design unit for creating the electronic contract form by imaging a contract form, and designing the style of the electronic contract form;
a log-in managing unit for authorizing the mobile terminal and a user of the mobile terminal; and
a form-transferring unit for transferring the electronic contract form designed by the form design unit to the mobile terminal.

2. The integrated authentication system according to Claim 1, wherein the electronic contract comprises:
a meta-data part corresponding to a contract information inputted by the user of the mobile terminal;
an imaged part imaged from the style of the contract form; and
a contract verification part including an evidence for certifying a contract conclusion,
wherein the meta-data part is overlaid on the imaged part, and wherein the contract verification part is overlaid on the imaged part.

3. The integrated authentication system according to Claim 2, wherein the contract verification part comprises at least one selected from the group consisting of a voice, a picture and a fingerprint.

4. The integrated authentication system according to Claim 3, wherein the integrated authentication server further comprises a transcoding unit for transcoding a codec of the voice, picture stored in the integrated authentication server to be compatible with the mobile terminal which does not support the codec of the voice or the picture stored in the integrated authentication server.

5. The integrated authentication system according to Claim 1, wherein the integrated authentication server further comprises a time stamp unit which checks whether the electronic contract form is counterfeited or altered by using a certificate check module of a certification authority server if the mobile terminal receives a certificate of the electronic contract form from the certification authority server.

6. The integrated authentication system according to Claim 1, wherein the mobile terminal comprises a cryptographic module for encrypting the concluded electronic contract form; and wherein the integrated authentication server further comprises a deciphering unit for deciphering the encrypted concluded electronic contract form.

7. The integrated authentication system according to Claim 1, wherein the mobile terminal further comprises a contract-confirming unit for sending a certification number to both contracting parties' cell phone or e-mail address after completing filling the electronic contract form, receiving the certification number from the contracting parties, and completing the conclusion of the contract.

8. The integrated authentication system according to Claim 7, wherein the integrated authentication server further comprises a contract conclusion-notifying unit for notifying the conclusion of the contract to the contract parties and person interested after the completion of the conclusion of the contract.

9. The integrated authentication system according to Claim 8, wherein the contract conclusion-notifying unit notifies the conclusion of the contract via a cell phone massage.

10. The integrated authentication system according to Claim 1, wherein the form design unit allocates control on the electronic contract form, wherein the control include at least one selected from the group consisting of a text, a check box, a radio button, a list box and a signature and wherein the user of the mobile terminal can modify the design of the electronic contract form by relocating the controls and modify a property of the control.

11. The integrated authentication system according to Claim 10, wherein the controls have a correlation therebetween.

12. The integrated authentication system according to Claim 10, wherein each of the controls has a data-entry rule.

13. The integrated authentication system according to Claim 1, further comprising: a distribution storage unit for storing the data of the integrated authentication server.

14. The integrated authentication system according to Claim 13, further comprising:
an external storage unit for storing the data of the integrated authentication server.

15. The integrated authentication system according to Claim 2, wherein the electronic contract further comprises an e-signature part for after writing a signature of contractor adjusting the size of the signature into a predetermined size and overlaying the size adjusted signature on a signature area of the electronic contract form.
